# EUROPEAN PATENT SPECIFICATION

(11) **EP 2 358 532 B1**
(45) Date of publication and mention of the grant of the patent: **17.12.2014**
(21) Application number: 09748775.5
(22) Date of filing: 04.11.2009
(51) Int. Cl.: B32B 27/32

(54) **MULTILAYER THERMOSHRINKABLE FILMS**
MEHRLAGIGE, WÄRMESCHRUMPFBARE FOLIEN
FILMS THERMO-RÉTRACTABLES MULTICOUCHES

(30) Priority: 16.12.2008 EP 08171769; 09.01.2009 US 204659 P
(43) Date of publication of application: 24.08.2011
(73) Proprietor: Basell Poliolefine Italia S.r.l., 20127 Milano (IT)
(72) Inventor: GRAZZI, Michele, I-44040 Casaglia (FE) (IT); PELLEGATTI, Giampaolo, I-44030 Boara (FE) (IT); BASSI, Paolo, I-44100 Ferrara (IT)
(74) Representative: Gaverini, Gaetano Luigi Attilio
(86) International application number: PCT/EP2009/064623
(87) International publication number: WO 2010/069668

(56) References cited:
- WO-A1-97/18083
- WO-A1-97/22475
- WO-A1-2009/077287
- US-A1- 2007 082 185

## Description

This invention relates to multilayer thermoshrinkable films in which at least one layer comprises a copolymer of ethylene with α-olefins having 3-12 carbon atoms (LLDPE) and at least one layer comprises a copolymer of propylene with hexene-1.

Multilayer thermoshrinkable films in which at least one layer comprises LLDPE are known in the art. The said films are usually prepared by a co-extrusion process in which LLDPE is fed to the central extruder and polymer mixtures suitable for giving the film workability are fed to the lateral extruders. Depending on the technology used, a flat or tubular primary film is obtained which is then oriented in a biaxial direction by the known tenter frame or double bubble methods. Multilayer thermoshrinkable films usually consist of a middle layer essentially made up of an LLDPE modified with octene-1 and 2 outer layers which are intended to prevent the film sticking together during working and to improve the processability of the film. It is known in fact that certain aspects of the production of thermoshrinkable films based on LLDPE are critical because the temperature at which the orientation process takes place is close to the temperature at which the polymer melts. There may thus be problems such as tearing of the film and instability of the bubble when the film is produced by the double bubble method.

Examples of thermoshrinkable multilayer films are given in US Patent 4532189. This patent describes films with 3 or 5 layers in which the middle layer is made up of linear low- or medium-density ethylene copolymers (LLDPE or LMDPE). Ethylene/propylene copolymers (EPC), ethylene/vinyl-acetate copolymers (EVA) or low-density polyethylene (LDPE) can be added to the middle layer. The outer layers are made up of EPC, with the possible addition of homopolymeric polypropylene (PP), LLDPE or LMDPE. Any intermediate layers are made up of EVA or mixtures of LLDPE or LMDPE with ionomeric resins. According to what is reported in the said patent, the film has good physicomechanical characteristics.

Patent application EP-A-586160 describes a thermoshrinkable multilayer film with 3 or 5 layers in which the middle layer is made up of LLDPE. The outer layers may be made up of blends of EPC with polybutene (PB), or else blends of PP or EPC with a propylene/butene copolymer (PBC), or of PBC. The patent application reports that the film has good lap seal strength characteristics.

Patent application EP-A-595252 describes 3-layer thermoshrinkable films in which the middle layer is made up of LLDPE to which additives such as hydrogenated hydrocarbon resins, polyethylene or polypropylene waxes, VLDPE, etc., are added. The addition of these additives is claimed to give improved physicomechanical characteristics and improved lap seal strength to the films. The outer layers are made up of PP or EPC, also with the addition of the compounds mentioned above.

The said films present various problems, however, depending on the composition of the various layers. If the outside layer is made up of PP and/or EPC, for example, the film can only be heat-sealed at relatively high temperature. In addition, the working range within which the orientation process can be carried out, i.e. the temperature range within which the film can be oriented without there being problems of the film itself tearing or instability of the bubble, is restricted and shifted towards relatively high temperatures. The use of PBC in the outer layers is claimed to reduce the sealability temperature but - especially when the copolymer contains large amounts of butene - has the disadvantage of increasing the percentage of polymer extractable in organic solvents to levels which are not acceptable for applications of the film in the food sector. In all cases, the linking of polyethylene-based layers with polypropylene-based layers can cause problems of delamination of the resultant film, because of the poor compatibility between the various layers.

With a view to overcoming the said disadvantages, WO97/22475 describes multilayer thermoshrinkable films having an improved balance of physicomechanical properties, processability and sealability at low temperatures, in which at least one layer comprises LLDPE and at least one layer comprises a polyolefin composition comprising a copolymer of propylene with ethylene and/or one or more CH₂=CHR¹ α-olefins, where R¹ is a hydrocarbon radical having 2-10 carbon atoms, containing more than 70% by weight of propylene, the said polyolefin composition having a xylene-insoluble fraction greater than 85%, a maximum melting peak at temperatures above 130°C and a crystallinity content such that at 90°C the percentage of material melted is greater than 10%.

It has now been found that the mechanical and optical properties and the sealabilty of thermoshrinkable films based on LLDPE can be further improved when at least one layer comprises a particular copolymer of propylene with hexene-1.

Thus the present invention provides a multilayer film in which at least one layer (A) comprises a copolymer (A1) of propylene with hexene-1 containing from 4 to 10% by weight of hexene-1 and having Melt Flow Rate (MFR, measured according to ISO 1133, 230°C/2.16 kg, i.e. at 230°C with 2.16 kg load) from 1 to 10 g/10 min.; and at least one layer (B) comprises a copolymer (B1) of ethylene with one or more CH₂=CHR α-olefins, where R is a C₁-C₁₀ alkyl radical, the said copolymer containing up to 20 mol %, preferably from 0.5 to 20 mol%, more preferably from 1 to 10 mol% of CH₂=CHR α-olefins and having a density from 0.88 to 0.945 g/cm³, preferably from 0.90 to 0.930 g/cm³.

The said film is characterized by a good set of physicomechanical properties and by improved processability, compared with films of the prior art having a similar structure. The film can in fact be easily oriented, without problems due to bubble instability, in a temperature range which is wider and lower than the conventionally used temperatures. The orientation at low temperature also has the advantage of improving the mechanical and optical properties of the film.

In fact, the film of the present invention is in particular characterized by improved levels of Elmendorf tear resistance and Haze, in combination with excellent shrink values at high temperatures (reason why it qualifies as thermoshrinkable), a very low Seal Initiation Temperature (S.I.T.) and high seal strength.

Moreover, as the copolymer (A1) has a very low content of hexane extractables, the film of the present invention can be employed in food packaging.

The said amounts of hexene-1 are referred to the total weight of the copolymer (A1).

Other comonomers, selected in particular from ethylene and CH₂=CHR^{I} α-olefins where R^{I} is a C₂-C₈ alkyl radical, hexene-1 excluded, can be present, provided that the final properties of the copolymer are not substantially worsened. Examples of the said CH₂=CHR^{I} α-olefins are butene-1, 4-methyl-1-pentene, octene-1. Among the said other comonomers, ethylene is preferred.

Indicatively, the total amount of comonomer(s) different from propylene and hexene-1 in the copolymer (A1) is from 0.5 to 2% by weight, referred to the total weight of the copolymer. From the above definition, it is evident that the term "copolymer" includes polymers containing more than one kind of comonomers, such as terpolymers.

Moreover, the copolymer (A1) is semicrystalline, as it has a crystalline melting point, and typically has a stereoregularity of isotactic type.

Preferably, said copolymer exhibits at least one of the following features:
- hexene-1 content from 5 to 10% by weight, more preferably from 5 to 8% by weight, in particular from 6 to 8% by weight;
- a melting temperature of from 125 to 150°C, more preferably from 125 to 145°C, determined by differential scanning calorimetry, according to ISO 11357-3, with a heating rate of 20 °C/minute;
- a solubility in xylene at room temperature (i.e. about 25° C) equal to or lower than 25 % by weight, preferably equal to or lower than 20 % by weight;
- content of fraction extractable in n-hexane of less than 5.5% by weight, more preferably equal to or lower than 4% by weight, in particular equal to or lower than 3% by weight, measured according to FDA 177, 1520;
- Isotacticity Index equal to or higher than 97%, determined as m diads/total diads using ¹³C-NMR;
- a molecular weight distribution expressed by the M̅w /M̅n ratio, measured by GPC, (Gel Permeation Chromathograpy), from 4 to 7.

It has been found that the above said features can be obtained with polymerization processes carried out in the presence of stereospecific Ziegler-Natta catalysts supported on magnesium dihalides.

The polymerization process, which can be continuous or batch, is carried out following known techniques and operating in liquid phase, in the presence or not of inert diluent, or in gas phase, or by mixed liquid-gas techniques. It is preferable to carry out the polymerization in gas phase.

Polymerization reaction time, pressure and temperature are not critical, however it is best if the temperature is from 20 to 100°C. The pressure can be atmospheric or higher.

The regulation of the molecular weight is carried out by using known regulators, hydrogen in particular.

The said stereospecific polymerization catalysts comprise the product of the reaction between:
1) a solid component, containing a titanium compound and an electron-donor compound (internal donor) supported on magnesium dihalide (preferably chloride);
2) an aluminum alkyl compound (cocatalyst); and, optionally,
3) an electron-donor compound (external donor).

Said catalysts are preferably capable of producing homopolymers of propylene having an isotactic index higher than 90% (measured as weight amount of the fraction insoluble in xylene at room temperature).

The solid catalyst component (1) contains as electron-donor a compound generally selected among the ethers, ketones, lactones, compounds containing N, P and/or S atoms, and mono-and dicarboxylic acid esters.

Catalysts having the above mentioned characteristics are well known in the patent literature; particularly advantageous are the catalysts described in US patent 4,399,054 and European patent 45977.

Particularly suited among the said electron-donor compounds are phthalic acid esters and succinic acid esters.

Suitable succinic acid esters are represented by the formula (I): 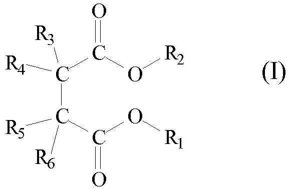 wherein the radicals R₁ and R₂, equal to or different from each other, are a C1-C20 linear or branched alkyl, alkenyl, cycloalkyl, aryl, arylalkyl or alkylaryl group, optionally containing heteroatoms; the radicals R₃ to R₆ equal to or different from each other, are hydrogen or a C1-C20 linear or branched alkyl, alkenyl, cycloalkyl, aryl, arylalkyl or alkylaryl group, optionally containing heteroatoms, and the radicals R₃ to R₆ which are joined to the same carbon atom can be linked together to form a cycle.

R₁ and R₂ are preferably C1-C8 alkyl, cycloalkyl, aryl, arylalkyl and alkylaryl groups. Particularly preferred are the compounds in which R₁ and R₂ are selected from primary alkyls and in particular branched primary alkyls. Examples of suitable R₁ and R₂ groups are methyl, ethyl, n-propyl, n-butyl, isobutyl, neopentyl, 2-ethylhexyl. Particularly preferred are ethyl, isobutyl, and neopentyl.

One of the preferred groups of compounds described by the formula (I) is that in which R₃ to R₅ are hydrogen and R₆ is a branched alkyl, cycloalkyl, aryl, arylalkyl and alkylaryl radical having from 3 to 10 carbon atoms. Another preferred group of compounds within those of formula (I) is that in which at least two radicals from R₃ to R₆ are different from hydrogen and are selected from C1-C20 linear or branched alkyl, alkenyl, cycloalkyl, aryl, arylalkyl or alkylaryl group, optionally containing heteroatoms. Particularly preferred are the compounds in which the two radicals different from hydrogen are linked to the same carbon atom. Furthermore, also the compounds in which at least two radicals different from hydrogen are linked to different carbon atoms, that is R₃ and R₅ or R₄ and R₆ are particularly preferred. Other electron-donors particularly suited are the 1,3-diethers, as illustrated in published European patent applications EP-A-361 493 and 728769.

As cocatalysts (2), one preferably uses the trialkyl aluminum compounds, such as Al-triethyl, Al-triisobutyl and Al-tri-n-butyl.

The electron-donor compounds (3) that can be used as external electron-donors (added to the Al-alkyl compound) comprise the aromatic acid esters (such as alkylic benzoates), heterocyclic compounds (such as the 2,2,6,6-tetramethylpiperidine and the 2,6-diisopropylpiperidine), and in particular silicon compounds containing at least one Si-OR bond (where R is a hydrocarbon radical). Examples of the said silicon compounds are those of formula Rₐ¹ R_{b}²Si(OR³)_{c}, where a and b are integer numbers from 0 to 2, c is an integer from 1 to 3 and the sum (a+b+c) is 4; R¹, R², and R³ are alkyl, cycloalkyl or aryl radicals with 1-18 carbon atoms optionally containing heteroatoms.

Thexyltrimethoxysilane (2,3-dimethyl-2-trimethoxysilyl-butane) is particularly preferred. The previously said 1,3- diethers are also suitable to be used as external donors. In the case that the internal donor is one of the said 1,3-diethers, the external donor can be omitted.

The catalysts may be precontacted with small quantities of olefin (prepolymerization), maintaining the catalyst in supension in a hydrocarbon solvent, and polymerizing at temperatures from room to 60 °C, thus producing a quantity of polymer from 0.5 to 3 times the weight of the catalyst.

The operation can also take place in liquid monomer, producing, in this case, a quantity of polymer up to 1000 times the weight of the catalyst.

Typically, the copolymer (B1) of layer (B) is a linear copolymer.

It is preferably a copolymer of ethylene with a CH₂=CHR α-olefin selected from propylene, butene-1, pentene-1, hexene-1, 4-methyl-1-pentene and octene-1.

The MFR (determined by the ASTM D-1238 method, condition E, namely at 190°C, with a load of 2.16 kg) of the said copolymer is preferably from 0.1 to 5 g/10 min., more preferably from 0.2 to 3 g/10 minutes.

Such copolymer (B1) is a polymer material known in the art and commercially available.

It belongs to the family of the copolymers that can be obtained by way of polymerization processes in the presence of coordination catalysts.

In particular it is possible to carry out the polymerization process in the presence of a Ziegler-Natta catalyst.

As is well known, the Ziegler-Natta polymerization catalysts comprise the reaction product of an organic compound of a metal of Groups I-III of the Periodic Table (for example, an aluminum alkyl), and an inorganic compound of a transition metal of Groups IV-VIII of the Periodic Table (for example, a titanium halide), preferably supported on a Mg halide. The polymerization conditions to be used with such catalysts generally are well known also.

The polymer material of layer (B) can be made up essentially of a polymer composition (i) comprising from 80 to 100 parts by weight of the said copolymer of ethylene (B1) and from 5 to 30 parts by weight of a copolymer (B2) of propylene with ethylene and/or one or more CH2=CHR^{II} α-olefins, where R^{II} is a C₂-C₈ alkyl radical, the said copolymer (B2) containing from 60 to 98% by weight of units derived from propylene, and having a xylene-insoluble fraction greater than 70%. In polymer composition (i) the copolymer (B2) preferably contains from 70 to 95% by weight of units derived from propylene and from 5 to 30% by weight of units derived from the CH₂=CHR^{II} α-olefin; the said copolymer (B2) preferably has a xylene-insoluble fraction greater than 80%. Particular preference is given to polymer compositions (i) in which the copolymer (B2) contains from 80 to 98% by weight of units derived from propylene, from 1 to 10% by weight of units derived from ethylene and from 1 to 10% by weight of units derived from the CH₂=CHR^{II} α-olefin, which is preferably 1-butene, the said copolymer (B2) having a xylene-insoluble fraction greater than 80%. The said xylene-insoluble fractions are determined at room temperature.

Olefin compositions (i) comprising the components (B1) and (B2) as previously described can be produced by mixing both components in the molten state, for example in a mixer with a high homogenizing power or, alternatively, directly in an extruder. The said compositions (i) are preferably produced by a sequential polymerization process comprising several stages, as described in the patent applications WO 95/20009 and WO 93/03078.

The film of the invention can be conveniently produced using processes known in the art, such as the tenter frame process or the double bubble process.

Double bubble shrink films are characterised by particularly well balanced shrink properties introduced by the process.

The double bubble process comprises the following main steps.

### EXTRUSION

The polymer components in form of granules are fed via feed hoppers into extruders where the polymers are first melted, compressed, mixed and finally metered out with a constant rate. The necessary heat to melt the polymers is provided by heater bands round the barrels and mainly by the frictional heat coming from the polymer moving between the screw and the barrel.

### DIE - FORMING

In this step the materials are set to theirs final shape and size. The molten polymers leave the circular die and are instantly cooled by means of a water cooling ring with a dry internal calibrator to obtain a thick primary tube. The diameter of this primary tube is fairly small (300 to 400 mm). This tube is then conveyed to the top of the double bubble line and is then guided through a set of infrared heaters/ovens. When the bubble has reached a temperature near to the melting temperature, it is blown by means of air. Bi-axial orientation is obtained simultaneously by inflation and by a different speed ratio between the nip rolls before and after the ovens. The orientation is usually 5 to 6 times in both directions. Such a balanced orientation makes this process ideal for making films where balanced properties, such as shrinkage, are desired.

### POST FORMING

After the orientation step, the bubble is cooled with cooling rings, flattened and edge trimmed. Two separate film rolls are obtained on two independent winding stations. The winding units are often mounted on a total rotating platform.

The film of this invention preferably has a structure with three layers ABA, in which layers A and B have the compositions described earlier. The various layers can be present in variable amounts relative to the total weight of the film. Each of the two layers A is preferably present in amounts that generally range from about 5 to about 45% of the total weight of the film. More preferably, each of the A layers is present in amounts between 10 and 30%. The two A layers are preferably present in equal parts.

The total thickness of the film is preferably from 10 to 50 µm, more preferably from 10 to 30 µm

As is known to experts in the field, and as can be easily determined by routine tests, it is obviously possible to add further polymer components and additives (such as adhesion enhancers, stabilizers, antioxidants, anticorrosives, processing aids, etc.) and both organic and inorganic fillers which can give specific properties to the film of the invention.

The thermoshrinkable film of this invention has broad applications in the packaging sector, particularly the packaging of small objects, food, etc.

The following examples are given as illustrations and do not restrict the invention.

### EXAMPLES

The properties indicated were determined by the following methods.

### 1-hexene content and isotacticity

Determined by ¹³C-NMR spectroscopy.

¹³C-NMR spectra are acquired on a *Bruker DPX-600* spectrometer operating at 150.91 MHz in the Fourier transform mode at 120 °C.

The samples are dissolved in 1,1,2,2-tetrachloroethane-*d2* at 120 °C with a 8% wt/v concentration. Each spectrum is acquired with a 90° pulse, 15 seconds of delay between pulses and CPD (WALTZ 16) to remove ¹H-¹³C coupling. About 1500 transients are stored in 32K data points using a spectral window of 6000 Hz.

The peak of the Propylene CH is used as internal reference at 28.83 ppm.

The evaluation of diad distribution and the composition is obtained from Sαα using the following equations:
PP = 100 Sαα (PP) /Σ
PH = 100 Sαα (PH)/Σ
HH = 100 Sαα (HH)/Σ
Where Σ= Σ Sαα
[P] = PP+0.5PH
[H] = HH +0.5PH

### Ethylene content

Determined by IR spectroscopy.

### Butene-1 content

Determined by IR spectroscopy.

### Melt Flow Rate

Determined according to ISO 1183, at 230° C, 2.16 kg (equivalent to ASTM D 1238, condition L).

### Solubility in xylene

2.5 g of polymer and 250 ml of xylene are introduced in a glass flask equipped with a refrigerator and a magnetical stirrer. The temperature is raised in 30 minutes up to the boiling point of the solvent. The so obtained clear solution is then kept under reflux and stirring for further 30 minutes. The closed flask is then kept for 30 minutes in a bath of ice and water and in thermostatic water bath at 25° C for 30 minutes as well. The so formed solid is filtered on quick filtering paper. 100 ml of the filtered liquid is poured in a previously weighed aluminium container, which is heated on a heating plate under nitrogen flow, to remove the solvent by evaporation. The container is then kept on an oven at 80° C under vacuum until constant weight is obtained. The weight percentage of polymer soluble in xylene at room temperature is then calculated.

### Hexane extractable fraction

Determined according to FDA 177, 1520, by suspending in an excess of hexane a 100 µm thick film specimen of the composition being analyzed, in an autoclave at 50°C for 2 hours. Then the hexane is removed by evaporation and the dried residue is weighed.

### Melting temperature (ISO 11357-3)

Determined by differential scanning calorimetry (DSC). A sample weighting 6 ± 1 mg, is heated to 200 ± 1° C at a rate of 20 °C/min and kept at 200 ± 1° C for 2 minutes in nitrogen stream and it is thereafter cooled at a rate of 20° C/min to 40 ± 2° C, thereby kept at this temperature for 2 min to crystallise the sample. Then, the sample is again fused at a temperature rise rate of 20° C/min up to 200° C ± 1. The melting scan is recorded, a thermogram is obtained, and, from this, temperatures corresponding to peaks are read. The temperature corresponding to the most intense melting peak recorded during the second fusion is taken as the melting temperature.

### Density

Determined according to ISO 1183.

### Mw and Mn

Measured by way of Gel Permeation Chromatography (GPC), preferably carried out in 1,2,4-trichlorobenzene; in detail, the samples are prepared at a concentration of 70 mg/50 ml of stabilized 1,2,4 trichlorobenzene (250 µg/ml BHT (CAS REGISTRY NUMBER 128-37-0)); the samples are then heated to 170°C for 2.5 hours to solubilize; the measurements are run on a Waters GPCV2000 at 145°C at a flow rate of 1.0 ml/min. using the same stabilized solvent; three Polymer Lab columns are used in series (Plgel, 20µm mixed ALS, 300 X 7.5 mm).

### Haze

Determined according to ASTM method D 1003.

### Clarity

Determined according to ASTM D 1746.

### Gloss at 45°

Determined according to ASTM D 2457.

### Tensile Modulus

Determined according to ASTM D882, both in the machine direction (MD) and in the transverse direction (TD).

### Elmendorf Tear Strength

Determined according to ASTM D 1922, both in the machine direction (MD) and in the transverse direction (TD).

### Puncture resistance and deformation

Determined from the energy required to puncture the film with a plunger (50 mm, diameter of 4 mm) with a rate of 20 mm/min, followed by measuring the deformation.

### Shrinkage

Determined according to ASTM D 2732, both in the machine direction (MD) and in the transverse direction (TD).

### Seal strength

### Measured according to ASTM F 2029/ASTM F 88.

For each test two film specimens are superimposed in alignment. The superimposed specimens are sealed in transverse direction with a RDM Sealer, model HSE-3 multi seal. Sealing time is 0.5 seconds at a pressure of 1 bar. The sealing temperature is increased for each seal, starting from 100°C. The sealed samples are left to cool and stored 24 hours under Standard conditions (23°C and 50% relative humidity). The sealed samples are cut in 15 mm wide strips, which unsealed ends are attached to an Instron machine, where they are tested at a traction speed of 100 mm/min with an initial distance between the grips of 50 mm. The maximum force measured during the tensile test is defined as the seal strength.

### EXAMPLE 1

The copolymer (A1) is prepared as follows.

The solid catalyst component used in polymerization is a highly stereospecific Ziegler-Natta catalyst component supported on magnesium chloride, containing about 2.2% by weight of titanium and diisobutylphthalate as internal donor, prepared by analogy with the method described in WO03/054035 for the preparation of catalyst component A.

### CATALYST SYSTEM AND PREPOLYMERIZATION TREATMENT

Before introducing it into the polymerization reactor, the solid catalyst component described above is contacted at 15 °C for 3.8 minutes with aluminum triethyl (TEAL) and thexyltrimethoxysilane, in a TEAL/thexyltrimethoxysilane weight ratio equal to about 12.5 and in such quantity that the TEAL/solid catalyst component weight ratio be equal to about 7.8.

The catalyst system is then subjected to prepolymerization by maintaining it in suspension in liquid propylene at 20 °C for about 19 minutes before introducing it into the polymerization reactor.

### POLYMERIZATION

The polymerization is carried out in a gas phase polymerization reactor by feeding in a continuous and constant flow the prepolymerized catalyst system, hydrogen (used as molecular weight regulator), propylene and hexene-1 in the gas state.

The main polymerization conditions are:
- Temperature: 75°C
- Pressure: 1.6 MPa;
- molar ratio H₂/C3-: 0.0051- 0.0033;
- molar ratio C6-/(C6- + C3-): 0.0198 - 0.0224;
- residence time: 44.6 minutes.
Note: C3- = propylene; C6- = hexene-1.

A polymer yield of 18100 g of polymer/g of solid catalyst component is obtained.

The polymer particles exiting the reactor are subjected to a steam treatment to remove the reactive monomers and volatile substances, and then dried.

The resulting propylene copolymer (A1) contains 7.5% by weight of hexene-1. Moreover said propylene copolymer (A1) has the following properties:
- MFR: 1.8 g/10 min.;
- Amount of fraction soluble in xylene: 16.3% by weight;
- Melting temperature: 133.4 °C

The copolymer (B1) is a copolymer of ethylene with 3.1 mol% of octene-1, having density of 0.920 g/cm³ and MFR E of 1 g/10 min.

### Production of the film

A multilayer film with the structure ABA is produced by the double bubble method with the following steps:
- feeding of copolymer (A1) [layers (A)] and copolymer (B1) [layer (B)] to the relative extruders and extrusion of the three-layer tubular film with head temperatures between 225 and 240°C;
- cooling of the primary tubular film to temperatures around 25°C;
- heating of the primary film in an oven with IR rays or with hot air;
- biorientation with a 6/6 longitudinal/transverse stretch ratio;
- cooling of the bioriented tubular film to temperatures around 25°C.

A film 19 µm thick is so obtained in which the contribution of each outer layer was about 10% by weight and the middle layer about 80% by weight.

The optical and mechanical features of the film are shown in Table 1. The seal strength measurements are reported in Table 2.

### COMPARATIVE EXAMPLE 1

A three-layer film is produced by operating as in Example 1 but using, instead of copolymer (A1), a propylene polymer composition having a Melt Flow Rate of 1 g/10 min., consisting of.
i) 35% by weight of a copolymer of propylene with 3.25% by weight of ethylene;
ii) 65% by weight of a copolymer of propylene with 4% by weight of ethylene and 9% by weight of 1-butene.

The optical and mechanical features of the film are shown in Table 1. The seal strength measurements are reported in Table 2.

**Table 1**

| | Example 1 | Comparative Example 1 |
|---|---|---|
| Property | | |
| Haze (%) | 2.6 | 4.4 |
| Clarity (%) | 97.9 | 97.2 |
| Gloss at 45° (%) | 85.8 | 76.6 |
| Tensile Modulus MD/TD (N/mm²) | 490/480 | 417/502 |
| Elmendorf MD/TD (N) | 0.14/0.22 | 0.08/0.21 |
| Puncture resistance - Maximum load (N) | 25.5 | 23 |
| Deformation at Break (mm) | 2 | 2.6 |
| Shrinkage MD/TD at 100°C (%) | 44.3/49.2 | 35.4/36.2 |
| Shrinkage MD/TD at 120°C (%) | 64.1/64.8 | 59.9/59.2 |

**Table 2**

| Example No. | 1 | Comparative 1 |
|---|---|---|
| Temperature °C | Maximum Force (N) | |
| 100 | 0.37 | 0.23 |
| 105 | 0.78 | 0.34 |
| 110 | 5.50 | 2.60 |
| 115 | 14.50 | 5.10 |
| 120 | 16.00 | 7.60 |
| 125 | 15.07 | 8.30 |
| 130 | 13.00 | - |

## Claims

1. A multilayer film in which at least one layer (A) comprises a copolymer (A1) of propylene with hexene-1 containing from 4 to 10% by weight of hexene-1 and having Melt Flow Rate (MFR, measured according to ISO 1133, 230°C/2.16 kg) from 1 to 10 g/10 min.; and at least one layer (B) comprises a copolymer (B1) of ethylene with one or more CH₂=CHR α-olefins, where R is a C₁-C₁₀ alkyl radical, the said copolymer containing up to 20 mol % of CH₂=CHR α-olefins and having a density from 0.88 to 0.945 g/cm³.

2. The multilayer film of claim 1, wherein the copolymer (A1) has a melting temperature of from 125 to 150°C, determined by differential scanning calorimetry, according to ISO 11357-3, with a heating rate of 20 °C/minute

3. The multilayer film of claim 1, wherein the copolymer (A1) has a solubility in xylene at room temperature equal to or lower than 25 % by weight.

4. The multilayer film of claim 1, obtained by coextruding copolymers (A1) and (B1) with a double bubble process.

5. The multilayer film of claim 1, wherein the α-olefin in copolymer (B1) is selected from propylene, butene-1, pentene-1, hexene-1, 4-methyl-1-pentene and octene-1.

6. Use of the multilayer film of claim 1 for packaging.

## Patentansprüche

1. Mehrschichtfolie, wobei mindestens eine Schicht (A) ein Copolymer (A1) von Propylen mit Hexen-1, enthaltend von 4 bis 10 Gew.-% Hexen-1, umfasst und eine Schmelzflussrate (MFR, gemessen nach ISO 1133, 230 °C/2,16 kg) von 1 bis 10 g/10 min aufweist; und mindestens eine Schicht (B) ein Copolymer (B1) von Ethylen mit einem oder mehr CH₂=CHR-α-Olefin(en) umfasst, wobei R ein C₁- bis C₁₀-Alkylrest ist, das Copolymer bis zu 20 Mol-% CH₂=CHR-α-Olefine enthält und eine Dichte von 0,88 bis 0,945 g/cm³ aufweist.

2. Mehrschichtfolie nach Anspruch 1, wobei das Copolymer (A1) eine Schmelztemperatur von 125 bis 150 °C, bestimmt mittels der Differentialscanningkalorimetrie nach ISO 11357-3, mit einer Erhitzungsrate von 20 °C/Minute, aufweist.

3. Mehrschichtfolie nach Anspruch 1, wobei das Copolymer (A1) in Xylen bei Raumtemperatur eine Löslichkeit aufweist, die gleich oder niedriger als 25 Gew.-% beträgt.

4. Mehrschichtfolie nach Anspruch 1, die durch Coextrudieren der Copolymere (A1) und (B1) mit einem Double-Bubble-Verfahren erhalten wird.

5. Mehrschichtfolie nach Anspruch 1, wobei das α-Olefin in Copolymer (B1) aus Propylen, Buten-1, Penten-1, Hexen-1, 4-Methyl-1-penten und Octen-1 ausgewählt ist.

6. Verwendung der Mehrschichtfolie nach Anspruch 1 zur Verpackung.

## Revendications

1. Film multicouche dans lequel au moins une couche (A) comprend un copolymère (A1) de propylène et d'hexène-1 contenant 4 à 10% en poids d'hexène-1 et présentant un indice de fluidité à chaud (MFR - Melt Flow Rate, mesuré selon la norme ISO 1133, 230°C/2,16 kg) de 1 à 10 g/10 min.; et au moins une couche (B) comprend un copolymère (B1) d'éthylène et d'une ou de plusieurs α-oléfines CH₂=CHR, où R représente un radical C₁-C₁₀-alkyle, ledit copolymère contenant jusqu'à 20% en mole d'α-oléfines CH₂=CHR et présentant une densité de 0,88 à 0,945 g/cm³.

2. Film multicouche selon la revendication 1, dans lequel le copolymère (A1) présente une température de fusion de 125 à 150°C, déterminée par calorimétrie différentielle par balayage, selon la norme ISO 11357-3, à une vitesse de chauffage de 20°C/minute

3. Film multicouche selon la revendication 1, dans lequel le copolymère (A1) présente une solubilité dans le xylène à température ambiante égale ou inférieure à 25% en poids.

4. Film multicouche selon la revendication 1, obtenu par coextrusion des copolymères (A1) et (B1) dans un procédé double bulle.

5. Film multicouche selon la revendication 1, dans lequel l'α-oléfine dans le copolymère (B1) est choisie parmi le propylène, le butène-1, le pentène-1, l'hexène-1, le 4-méthyl-1-pentène et l'octène-1.

6. Utilisation du film multicouche selon la revendication 1 pour l'emballage.
